# FASCICULE DE BREVET EUROPEEN

(11) **EP 2 448 815 B1**
(45) Date de publication et mention de la délivrance du brevet: **10.08.2016**
(21) Numéro de dépôt: 10745336.7
(22) Date de dépôt: 25.06.2010
(51) Int. Cl.: B64C 1/14

(54) **ENCADREMENT D'UNE OUVERTURE MENAGEE DANS UN FUSELAGE D'AERONEF**
RAHMENKONSTRUKTION FÜR EINE ÖFFNUNG IN EINEM FLUGZEUGRUMPF
FRAME STRUCTURE FOR AN OPENING IN A FUSELAGE SHELL

(30) Priorité: 29.06.2009 FR 0954407
(43) Date de publication de la demande: 09.05.2012
(73) Titulaire: Airbus Operations (S.A.S.), 31060 Toulouse (FR)
(72) Inventeur: DUGERIE, Marc, F-32430 Encausse (FR); GALLANT, Guillaume, F-31480 Lareole (FR); DELAHAYE, Romain, F-31770 Colomiers (FR)
(74) Mandataire: Fantin, Laurent
(86) Numéro de dépôt international: PCT/FR2010/051317
(87) Numéro de publication internationale: WO 2011/001081

(56) Documents cités:
- WO-A-03/104080
- WO-A-2008/015360
- FR-A- 2 905 669
- US-A1- 2004 123 551
- US-A1- 2009 146 008

## Description

La présente invention se rapporte à un encadrement d'une ouverture ménagée dans un fuselage d'aéronef.

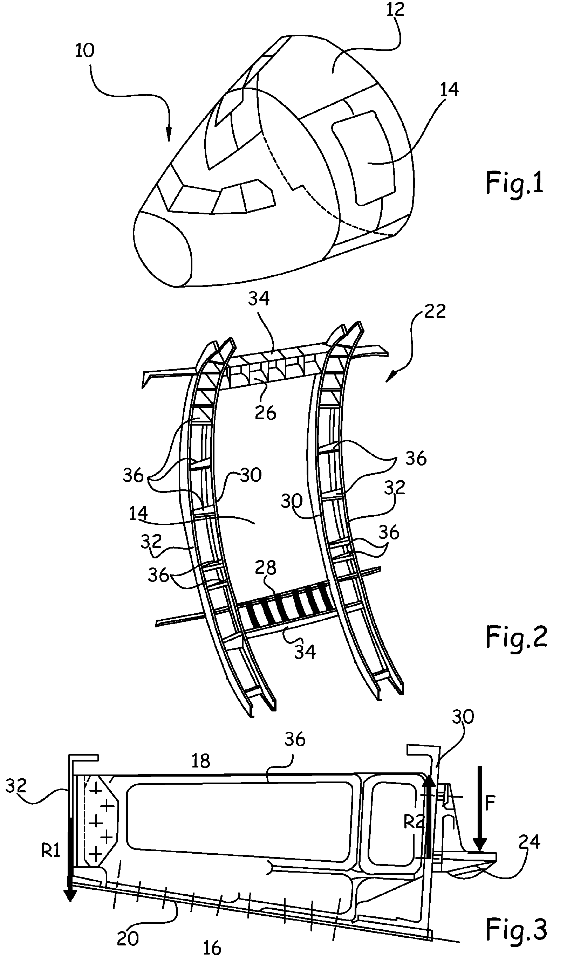

Sur les figures 1 à 3, on a représenté à titre d'exemple l'avant d'un aéronef 10 comportant un fuselage 12 dans lequel est pratiquée une ouverture 14 permettant par exemple le passage des passagers et étant susceptible d'être obturée par une porte dite porte passager séparant l'extérieur de l'aéronef 16 du milieu intérieur 18.

De manière connue, le fuselage d'un aéronef comprend une peau 20 renforcée par une structure comportant notamment une première série de raidisseurs longitudinaux (lisses) et une seconde série de raidisseurs transversaux (cadres). Pour assurer la reprise des efforts entre la structure de la porte et la structure du fuselage, un encadrement de porte 22 est prévu autour de l'ouverture 14. Dans le cas d'une porte de passager, cette dernière induit au niveau de l'encadrement de porte 22 des efforts principalement radiaux orientés vers l'extérieur de l'aéronef (matérialisés par la flèche F sur la figure 3) qui sont repris par des butées 24 prévues au niveau de l'encadrement 22.

Pour la reprise d'un tel type d'efforts, l'encadrement 22 comprend d'une part un cadre de bordure comportant un raidisseur longitudinal supérieur appelé linteau 26, un raidisseur longitudinal inférieur appelé seuil 28, des raidisseurs verticaux 30 de part et d'autre de l'ouverture 14, et d'autre part, un cadre secondaire constitué d'au moins deux raidisseurs verticaux 32 disposés de part et d'autre de l'ouverture à une certaine distance et deux raidisseurs longitudinaux supérieur et inférieur 34 distants du linteau 26 et du seuil 28. Des nervures ou renforts sont prévus pour relier le cadre de bordure et le cadre secondaire. Ainsi, les raidisseurs 30 et 32 sont reliés par des nervures dites nervures intercostales 36 de manière à former de part et d'autre de l'ouverture 12 une structure en forme d'échelle. Les documents WO03/104080 et WO2008/015360 décrivent une telle structure en forme d'échelle.

Comme illustré sur la figure 3, le moment généré par l'effort tranchant F qui est appliqué au niveau de chaque butée 24 sur l'encadrement 22 est repris par deux réactions opposées, une première réaction R1 au niveau du cadre secondaire et une seconde réaction R2 au niveau du cadre de bordure. Selon ce type de conception, l'équilibre des efforts s'effectue localement au droit de chaque butée de porte grâce à la nervure intercostale correspondante.

Le chargement de l'encadrement de porte 22 n'est pas limité à ces efforts radiaux. De manière générale, l'encadrement de porte doit garantir l'intégrité du fuselage.

Selon un agencement connu, tous les éléments constituant l'encadrement de porte 22 et la peau du fuselage sont métalliques, les raidisseurs verticaux 30 et 32 ainsi que les nervures intercostales 36 étant réalisés à partir de tôles épaisses usinées de manière conventionnelle. Après l'usinage, ces différents éléments sont assemblés de manière à former les sous-structures en échelle puis la peau est ensuite posée sur ces sous-structures ainsi formées. Cette solution à partir d'une peau métallique a pour inconvénient de comprendre de nombreuses fixations et a pour avantage d'avoir une bonne maîtrise de l'épaisseur et des plans de dépose successifs et parallèles entre eux. Afin de réduire la masse embarquée des aéronefs, on tend à utiliser les matériaux composites.

Une première variante de réalisation d'un encadrement de porte en matériau composite consiste à réaliser un premier sous-ensemble comportant le cadre de bordure, le cadre secondaire et les nervures intercostales. La réalisation d'un seul tenant de ce sous-ensemble nécessite un outillage complexe. Par ailleurs, l'assemblage avec une peau en matériau composite nécessite l'utilisation de cales en raison du défoisonnement de la peau réalisée à partir de plis pré-imprégnés ce qui conduit à augmenter fortement le temps d'assemblage.

Une autre variante de réalisation d'un encadrement de porte en matériau composite consiste à réaliser indépendamment tous les éléments en matériau composite puis à les assembler à la manière des éléments d'un encadrement de porte métallique. Toutefois, cette solution n'est pas satisfaisante car la réalisation de pièces en matériau composite de manière économique induit des problèmes de tolérance dimensionnelle lors de l'accostage des différentes pièces. Enfin, l'assemblage selon la même architecture que les pièces métalliques (cadre de bordure, cadre secondaire, nervures intercostales) des éléments en matériau composite ne permet pas d'optimiser la reprise des efforts en raison de la faible tenue des pièces en matériau composite aux efforts appliqués en dehors du plan des plis formant lesdites pièces.

Aussi, la présente invention vise à pallier aux inconvénients de l'art antérieur en proposant un encadrement d'une ouverture ménagée dans un fuselage d'aéronef, dont l'architecture optimise la reprise des efforts. Selon un autre objectif, l'architecture doit permettre de simplifier la réalisation de l'encadrement en matériau composite.

A cet effet, l'invention a pour objet un encadrement d'une porte prévue au niveau d'une ouverture pratiquée dans un fuselage d'un aéronef délimité par une peau, ledit encadrement comprenant un raidisseur longitudinal supérieur et un raidisseur longitudinal inférieur assurant la liaison entre deux sous-structures verticales disposées de part et d'autre de l'ouverture, au niveau desquelles est prévue au moins une butée assurant la reprise des efforts radiaux exercés par la porte, caractérisé en ce que chaque sous-structure verticale comprend au moins trois parois en matériau composite, une première paroi qui forme le chant de l'ouverture, une deuxième paroi reliée à la première paroi, disposée sensiblement perpendiculairement à la première paroi et disposée, à l'état installé, dans le plan

de la peau du fuselage et une troisième paroi inclinée reliant la première paroi et la deuxième paroi, lesdites première, deuxième et troisième parois étant reliées entre elles pour former un profil fermé et creux de manière à obtenir une structure en caisson.

D'autres caractéristiques et avantages ressortiront de la description qui va suivre de l'invention, description donnée à titre d'exemple uniquement, en regard des dessins annexés sur lesquels :
- la figure 1 est une représentation schématique de l'avant d'un aéronef,
- la figure 2 est une vue en perspective depuis l'intérieur de l'aéronef d'un encadrement de porte selon l'art antérieur,
- la figure 3 est une coupe selon un plan contenant une nervure intercostale d'un encadrement de porte selon l'art antérieur,
- la figure 4 est une vue en perspective depuis l'intérieur d'un aéronef d'un encadrement de porte selon l'invention,
- la figure 5 est une coupe selon une direction longitudinale d'un bord de l'encadrement de porte illustré sur la figure 4,
- la figure 6 est une vue en perspective illustrant l'intérieur d'un renfort formant le bord de l'encadrement de porte illustré sur la figure 5,
- la figure 7 est une vue en perspective d'un encadrement de porte selon l'invention illustrant le gain de place par rapport à une solution de l'art antérieur, et

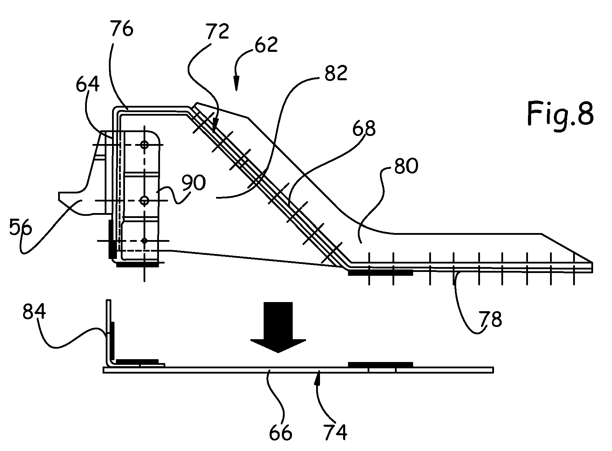

- la figure 8 est une coupe longitudinale illustrant les deux parties formant un bord d'un encadrement de porte selon l'invention avant leur assemblage.

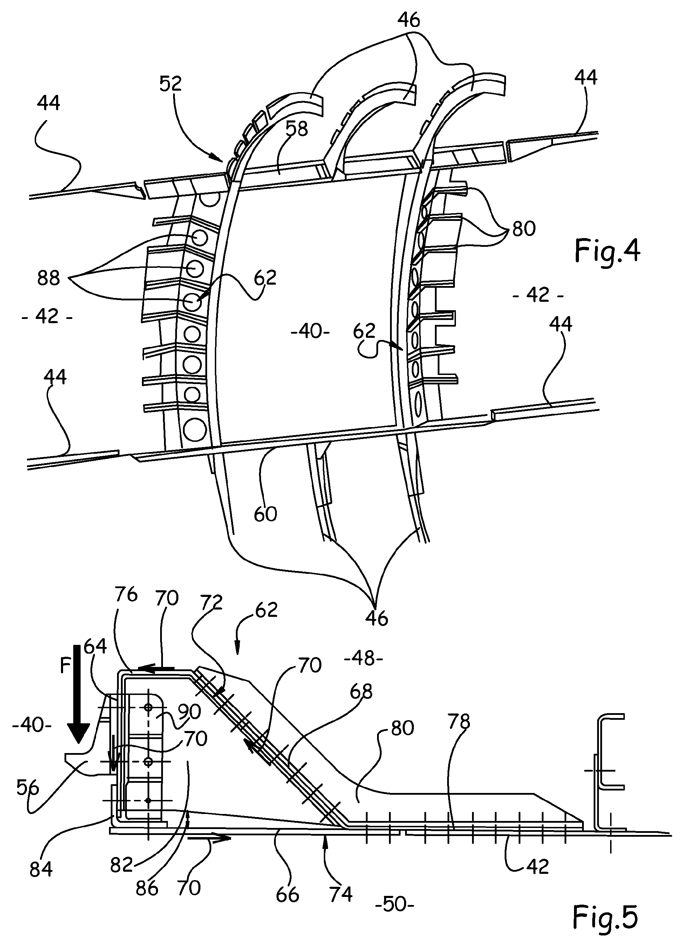

Sur la figure 4, on a représenté un fuselage d'aéronef dans lequel doit être pratiquée une ouverture 40 susceptible d'être obturée par une porte (non représentée).

Le fuselage comprend une peau 42 rapportée sur une structure constituée de raidisseurs, notamment une première série de renforts longitudinaux 44 appelés lisses et une seconde série de renforts transversaux 46 appelés cadres.

La peau 42 permet d'isoler l'intérieur de l'aéronef référencé 48 du milieu extérieur référencé 50, sur la figure 5.

Selon une application non limitative, cette ouverture 40 permet le transfert des passagers de l'extérieur vers l'intérieur ou vice versa.

Pour assurer notamment la transmission des efforts entre la porte et la structure de l'aéronef, l'ouverture 40 est délimitée par un encadrement 52.

Comme pour l'art antérieur, l'encadrement de porte 52 comprend des butées 56 contre lesquelles peut prendre appui la porte et assurant notamment la reprise des efforts radiaux orientés vers l'extérieur, matérialisés par la flèche F. Ces butées sont de préférence disposées au niveau des montants verticaux dudit encadrement.

Pour la suite de la description, on entend par axe longitudinal de l'aéronef, l'axe qui va de l'avant à l'arrière de l'aéronef, sensiblement parallèle aux génératrices du fuselage. On entend par plan transversal, un plan perpendiculaire à l'axe longitudinal. Une direction radiale est contenue dans un plan transversal et passe par l'axe longitudinal. On entend par un plan longitudinal un plan contenant l'axe longitudinal et une direction radiale.

L'encadrement de porte 52 comprend un raidisseur longitudinal supérieur 58 appelé linteau, un raidisseur longitudinal inférieur 60 appelé seuil, le linteau 58 et le seuil 60 assurant la liaison entre deux sous-structures verticales 62 disposées de part et d'autre de l'ouverture 40. Le linteau et le seuil se présentent sous la forme de nervures disposées dans des plans longitudinaux. Ces raidisseurs 58 et 60 ont généralement une section en C avec une partie centrale disposée dans un plan longitudinal et des bords tombés dont l'un est en contact avec la peau de l'aéronef.

Ces raidisseurs 58 et 60 sont réalisés en matériau composite. Toutefois, ils peuvent être en un autre matériau, par exemple en métal. Ils ne sont pas plus décrits car ils peuvent avoir différentes formes pour assurer notamment la liaison entre les sous-structures verticales 62.

Selon l'invention, les sous-structures verticales 62 sont réalisées en matériau composite et n'ont pas une architecture en forme d'échelle comme pour l'art antérieur mais une architecture en caisson.

Par une architecture en caisson, on entend qu'une sous-structure 62 comprend au moins trois parois reliées entre elles de manière à former un profil fermé et creux.

A cet effet, comme illustré sur la figure 5, une sous-structure 62 comprend une première paroi 64 disposée au niveau du chant de l'ouverture, une deuxième paroi 66 disposée sensiblement perpendiculairement à la première 64, dans le plan de la peau de l'aéronef une fois l'encadrement raccordé au fuselage, ladite deuxième paroi 66 étant reliée et adjacente à la première paroi 64, et une troisième paroi inclinée 68 reliant l'extrémité de la première paroi 64 orientée vers l'intérieur et l'extrémité de la deuxième paroi 66 éloignée du chant de l'ouverture de manière à obtenir une forme en caisson.

Comme illustré sur la figure 5, la forme en caisson permet d'équilibrer les moments créés par les efforts des butées par un chargement en torsion de cette forme en caisson matérialisé par les flèches 70. Ce flux de torsion crée des efforts de cisaillement au niveau des sous-structures en caisson 62 qui sont plus propices à une réalisation en matériaux composites que les structures en échelle de l'art antérieur car les efforts restent toujours dans le plan des parois qui sont réalisées sous forme généralement d'éléments stratifiés.

Selon un autre aspect, ces flux de torsion générés dans les sous-structures 62 sont équilibrés au niveau de leurs zones de jonction avec le linteau 58 et le seuil 60.

Selon un mode de réalisation, chaque sous-structure 62 comprend une première partie 72 comportant la première paroi 64 et la paroi inclinée 68 et une seconde partie 74 comprenant la deuxième paroi 66 et formant une partie de la peau du fuselage.

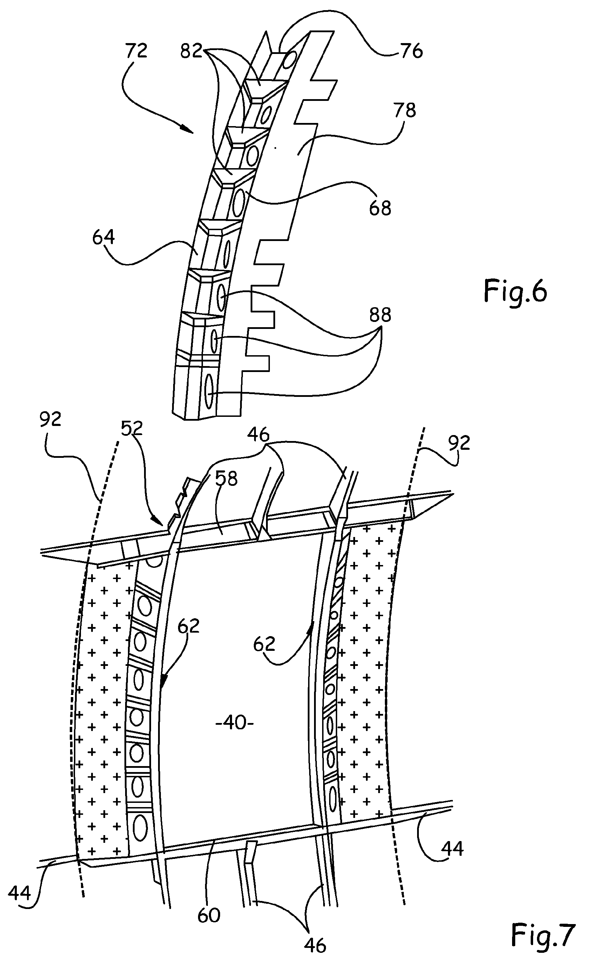

La première partie 72 de la forme en caisson est illustrée en détails sur les figures 5 et 6. Elle est constituée d'une plaque ayant une section avec un premier pan formant la première paroi 64, un second pan 76 sensiblement perpendiculaire au premier pan, un troisième pan formant la paroi inclinée 68 et un quatrième pan 78 servant de surface d'appui pour la seconde partie 74 et éventuellement la peau 42 du fuselage.

Cette première partie 72 de la forme en caisson comprend des renforts pour empêcher les pans de se déplier. Ainsi, la première partie 72 de la forme en caisson comprend une première série de nervures 80 disposées perpendiculairement sur la surface orientée vers l'intérieur de l'aéronef des troisième et quatrième pans et une seconde série de nervures 82 disposées perpendiculairement sur la surface orientée vers l'extérieur de l'aéronef des premier, deuxième et troisième pans.

Les nervures 80 et 82 ne comprennent des bords tombés qu'au niveau des bords en contact avec la première partie 72.

De préférence, les nervures 80 et 82 sont disposées au droit des butées de porte 56.

La seconde partie 74 de la forme en caisson a une forme de plaque et constitue une partie de la peau du fuselage de l'aéronef.

Pour assurer la liaison entre les deux parties 72 et 74, on peut prévoir une cornière 84 pour assurer la liaison entre la seconde partie 74 et le premier pan formant la première paroi 64 de la première partie 72, la seconde partie 74 étant plaquée contre le quatrième pan 78. Cette cornière 84 assure la fonction de pièce fusible et contribue à simplifier l'accostage entre les deux parties 72 et 74 de la forme en caisson.

De préférence, les nervures 82 ont des dimensions adaptées pour laisser un espacement 86 entre lesdites nervures 82 et la seconde partie 74, comme illustré sur la figure 5 afin que lesdites nervures 82 n'interfèrent pas avec ladite seconde partie 74 lors de l'assemblage des deux parties 72 et 74 de la forme en caisson.

Selon un autre avantage, du fait que la seconde partie 74 formant la peau du fuselage au niveau de l'encadrement soit en contact seulement au niveau de la cornière 84 et du quatrième pan 78 permet de localiser les zones de variation d'épaisseur (par exemple en raison de lâchés de plis) dans des zones qui ne servent pas d'appui à une autre pièce notamment la première partie 72 de la forme en caisson.

Avantageusement, la paroi inclinée 68 comprend des trous 88 pour permettre l'accès à l'intérieur de la forme en caisson, pour par exemple permettre l'accès aux fixations des butées 56 et d'éventuelles contre butées 90.

La fabrication en matériau composite de la première partie 72 de la forme en caisson est simplifiée et ne nécessite pas un outillage complexe car les nervures 80 et 82 ne comportent pas de semelles en contact avec la peau formant des contre dépouilles.

De plus, le fait de supprimer ces semelles permet de simplifier l'accostage entre les deux parties 72 et 74 de la forme en caisson.

Selon un autre avantage, cette forme en caisson permet de réduire l'encombrement de l'encadrement de porte comme illustré sur la figure 7, notamment lorsque l'ouverture est ménagée dans des zones du fuselage ayant une forme proche du cylindre.

Dans ces zones, le fuselage comprend une structure constituée de lisses et de cadres disposés selon un écartement régulier et constant pour toute la zone. Lorsque l'ouverture a une largeur sensiblement égale à deux pas de cadres, comme illustré sur la figure 7, l'encadrement avec une forme en caisson permet de réduire l'encombrement de 50% de l'intercadre par rapport à une structure de l'art antérieur en forme d'échelle dont les limites sont matérialisées par les traits en pointillé 92.

Selon un autre avantage, cette forme en caisson simplifie la liaison entre l'encadrement de porte et le reste du fuselage.

Avantageusement, comme illustré sur la figure 5, la première partie 72 de la forme en caisson, et plus particulièrement le quatrième pan 78 peut assurer la fonction d'éclisse et se prolonger au-delà de la seconde partie 74 de manière à offrir un seul plan de pose à la seconde partie 74 formant la peau du fuselage au niveau de l'encadrement et à la peau 42 du fuselage. Cette solution réduit le nombre de pièces.

Selon un autre aspect, la sous-structure en forme de caisson simplifie l'accostage de l'encadrement avec le reste du fuselage en raison de la présence d'un seul plan de pose contrairement aux solutions de l'art antérieur qui comprennent plusieurs plans de pose en raison des bords tombés des nervures intercostales et des raidisseurs en contact avec la peau.

## Revendications

1. Encadrement d'une porte prévue au niveau d'une ouverture pratiquée dans un fuselage d'un aéronef délimité par une peau, ledit encadrement comprenant un raidisseur longitudinal supérieur et un raidisseur longitudinal inférieur assurant la liaison entre deux sous-structures verticales (62) disposées de part et d'autre de l'ouverture, au niveau desquelles est prévue au moins une butée (56) assurant la reprise des efforts radiaux exercés par la porte, **caractérisé en ce que** chaque sous-structure verticale (62) comprend au moins trois parois en matériau composite, une première paroi (64) qui forme le chant de l'ouverture, une deuxième paroi (66) reliée à la première paroi (64), disposée sensiblement perpendiculairement à la première paroi (64) et disposée, à l'état installé, dans le plan de la peau du fuselage et une troisième paroi inclinée (68) reliant la première paroi (64) et la deuxième paroi (66), lesdites première, deuxième et troisième parois (64, 66, 68) étant reliées entre elles pour former un profil fermé et creux de manière à obtenir une structure en caisson.

2. Encadrement d'une porte prévue au niveau d'une ouverture pratiquée dans un fuselage d'un aéronef selon la revendication 1, **caractérisé en ce que** chaque sous-structure en caisson (62) comprend une première partie (72) susceptible de former une cavité fermée avec la peau du fuselage.

3. Encadrement d'une porte prévue au niveau d'une ouverture pratiquée dans un fuselage d'un aéronef selon la revendication 2, **caractérisé en ce que** la première partie (72) de la sous-structure en caisson est constituée d'une plaque ayant une section avec un premier pan formant la première paroi (64), un second pan (76) sensiblement perpendiculaire au premier pan, un troisième pan formant la paroi inclinée (68) et un quatrième pan (78) servant de surface d'appui pour la peau du fuselage.

4. Encadrement d'une porte prévue au niveau d'une ouverture pratiquée dans un fuselage d'un aéronef selon la revendication 3, **caractérisé en ce que** la première partie (72) de la sous-structure en caisson comprend une série de nervures (82) disposées perpendiculairement sur la surface orientée vers l'extérieur de l'aéronef des premier, deuxième et troisième pans.

5. Encadrement d'une porte prévue au niveau d'une ouverture pratiquée dans un fuselage d'un aéronef selon la revendication 4, **caractérisé en ce que** les nervures (82) ont des dimensions adaptées pour laisser un espacement (86) entre lesdites nervures (82) et la peau du fuselage.

6. Encadrement d'une porte prévue au niveau d'une ouverture pratiquée dans un fuselage d'un aéronef selon l'une quelconque des revendications 3 à 5, **caractérisé en ce que** la première partie (72) de la sous-structure en caisson comprend une série de nervures (80) disposées perpendiculairement sur la surface orientée vers l'intérieur de l'aéronef des troisième et quatrième pans.

7. Encadrement d'une porte prévue au niveau d'une ouverture pratiquée dans un fuselage d'un aéronef selon l'une quelconque des revendications 3 à 6, **caractérisé en ce que** chaque sous-structure en caisson (62) comprend une cornière (84) pour assurer la liaison entre la première paroi (64) de la première partie (72) et la peau du fuselage.

8. Encadrement d'une porte prévue au niveau d'une ouverture pratiquée dans un fuselage d'un aéronef selon l'une quelconque des revendications 3 à 7, **caractérisé en ce que** la paroi inclinée (68) de la première partie (72) de chaque sous-structure (62) comprend des trous (88) pour permettre l'accès à l'intérieur de la sous-structure en caisson.

9. Encadrement d'une porte prévue au niveau d'une ouverture pratiquée dans un fuselage d'un aéronef selon l'une quelconque des revendications 3 à 8, **caractérisé en ce que** chaque sous-structure (62) comprend une seconde partie(74) disposée dans le plan de la peau du fuselage, la première partie comportant un pan (78) assurant la fonction d'éclisse et offrant un seul plan de pose à ladite seconde partie (74) de l'encadrement et au reste de la peau du fuselage.

10. Aéronef comprenant un encadrement d'une porte selon l'une quelconque des revendications 1 à 9.

## Patentansprüche

1. Rahmen einer Tür, die im Bereich einer Öffnung vorgesehen ist, die in einem Rumpf eines Luftfahrzeugs ausgebildet ist, das von einer Haut begrenzt ist, wobei der Rahmen eine in Längsrichtung verlaufende, obere Versteifung und eine in Längsrichtung verlaufende, untere Versteifung aufweist, die die Verbindung zwischen zwei vertikalen Unterstrukturen (62) gewährleisten, die beidseits der Öffnung angeordnet sind und in deren Bereich wenigstens ein Anschlag (56) vorgesehen ist, der die Aufnahme von radialen Belastungen gewährleistet, die von der Tür ausgeübt werden, **dadurch gekennzeichnet, dass** jede vertikale Unterstruktur (62) wenigstens drei Wände aus einem Verbundmaterial aufweist, eine erste Wand (64), die die Schmalseite der Öffnung bildet, eine zweite Wand (66), die mit der ersten Wand (64) verbunden ist, im Wesentlichen im rechten Winkel zur ersten Wand (64) angeordnet ist und im eingebauten Zustand in der Ebene der Haut des Rumpfes angeordnet ist, und eine dritte geneigte Wand (68), die die erste Wand (64) und die zweite Wand (66) verbindet, wobei die erste, zweite und dritte Wand (64, 66, 68) untereinander verbunden sind, um ein geschlossenes und hohles Profil zu bilden, um eine kastenförmige Struktur zu erhalten.

2. Rahmen einer Tür, die im Bereich einer Öffnung vorgesehen ist, die in einem Rumpf eines Luftfahrzeugs ausgebildet ist, nach Anspruch 1, **dadurch gekennzeichnet, dass** jede kastenförmige Unterstruktur (62) einen ersten Teil (72) aufweist, der dazu eingerichtet ist, einen geschlossenen Hohlraum mit der Haut des Rumpfes zu bilden.

3. Rahmen einer Tür, die im Bereich einer Öffnung vorgesehen ist, die in einem Rumpf eines Luftfahrzeugs ausgebildet ist, nach Anspruch 2, **dadurch gekennzeichnet, dass** der erste Teil (72) der kastenförmigen Unterstruktur sich aus einer Platte zusammensetzt, die einen Querschnitt aufweist mit einer ersten Teilwand, die die erste Wand (64) bildet, mit einer zweiten Teilwand (76), die im Wesentlichen im rechten Winkel zur ersten Teilwand angeordnet ist, mit einer dritten Teilwand, die die geneigte Wand (68) bildet, und mit einer vierten Teilwand (78), die eine Stützfläche für die Haut des Rumpfes bildet.

4. Rahmen einer Tür, die im Bereich einer Öffnung vorgesehen ist, die in einem Rumpf eines Luftfahrzeugs ausgebildet ist, nach Anspruch 3, **dadurch gekennzeichnet, dass** der erste Teil (72) der kastenförmigen Unterstruktur eine Reihe von Rippen (82) aufweist, die im rechten Winkel zu einer dem Äußeren des Luftfahrzeugs zugewandten Oberfläche der ersten, zweiten und dritten Teilwand angeordnet sind.

5. Rahmen einer Tür, die im Bereich einer Öffnung vorgesehen ist, die in einem Rumpf eines Luftfahrzeugs ausgebildet ist, nach Anspruch 4, **dadurch gekennzeichnet, dass** die Rippen (82) derart bemessen sind, dass zwischen den Rippen (82) und der Haut des Rumpfes ein Zwischenraum (86) bleibt.

6. Rahmen einer Tür, die im Bereich einer Öffnung vorgesehen ist, die in einem Rumpf eines Luftfahrzeugs ausgebildet ist, nach einem der Ansprüche 3 bis 5, **dadurch gekennzeichnet, dass** der erste Teil (72) der kastenförmigen Unterstruktur eine Reihe von Rippen (80) aufweist, die im rechten Winkel zu einer dem Inneren des Luftfahrzeugs zugewandten Oberfläche der dritten und vierten Teilwand angeordnet sind.

7. Rahmen einer Tür, die im Bereich einer Öffnung vorgesehen ist, die in einem Rumpf eines Luftfahrzeugs ausgebildet ist, nach einem der Ansprüche 3 bis 6, **dadurch gekennzeichnet, dass** jede kastenförmige Unterstruktur (62) ein Winkelstück (84) aufweist, um die Verbindung zwischen der ersten Wand (64) des ersten Teils (72) und der Haut des Rumpfs zu gewährleisten.

8. Rahmen einer Tür, die im Bereich einer Öffnung vorgesehen ist, die in einem Rumpf eines Luftfahrzeugs ausgebildet ist, nach einem der Ansprüche 3 bis 7, **dadurch gekennzeichnet, dass** die geneigte Wand (68) des ersten Teils (72) von jeder Unterstruktur (62) Löcher (88) aufweist, um den Zugang zum Inneren der kastenförmigen Unterstruktur zu erlauben.

9. Rahmen einer Tür, die im Bereich einer Öffnung vorgesehen ist, die in einem Rumpf eines Luftfahrzeugs ausgebildet ist, nach einem der Ansprüche 3 bis 8, **dadurch gekennzeichnet, dass** jede Unterstruktur (62) einen zweiten Teil (74) aufweist, der in der Ebene der Haut des Rumpfes angeordnet ist, wobei der erste Teil eine Teilwand (78) aufweist, die die Laschenfunktion gewährleistet und eine Auflagefläche für den zweiten Teil (74) des Rahmens und für die übrige Haut des Rumpfes bietet.

10. Luftfahrzeug, das einen Rahmen einer Tür nach einem der Ansprüche 1 bis 9 aufweist.

## Claims

1. Frame of a door provided at an opening made in a fuselage of an aircraft that is delimited by a skin, whereby said frame comprises an upper longitudinal stiffener and a lower longitudinal stiffener that provide the connection between two vertical substructures (62) that are arranged on both sides of the opening, at the level of which there is provided at least one stop (56) that provides the uptake of radial forces exerted by the door, **characterized in that** each vertical substructure (62) comprises at least three walls made of composite material, a first wall (64) that forms the edge of the opening, a second wall (66) that is connected to the first wall (64), and arranged essentially perpendicular to the first wall (64), and arranged, in the installed state, in the plane of the skin of the fuselage, a third inclined wall (68) that connects the first wall (64) and the second wall (66), the first, second and third walls (64, 66, 68) being connected to form a closed and hollow profile in such a way as to obtain a box structure.

2. Frame of a door provided at an opening made in an aircraft fuselage according to Claim 1, wherein each box substructure (62) comprises a first part (72) that can form a closed cavity with the skin of the fuselage.

3. Frame of a door provided at an opening made in a fuselage of an aircraft according to Claim 2, wherein the first part (72) of the box substructure consists of a plate that has a cross-section with a first face that forms the first wall (64), a second face (76) that is essentially perpendicular to the first face, a third face that forms the inclined wall (68), and a fourth face (78) that is used as a support surface for the skin of the fuselage.

4. Frame of a door provided at an opening that is made in a fuselage of an aircraft according to Claim 3, wherein the first part (72) of the box substructure comprises a series of ribs (82) arranged perpendicular to the surface that is oriented toward the exterior of the aircraft of the first, second, and third faces.

5. Frame of a door provided at an opening that is made in a fuselage of an aircraft according to Claim 4, wherein the ribs (82) have suitable dimensions for leaving a space (86) between said ribs (82) and the skin of the fuselage.

6. Frame of a door provided at an opening made in a fuselage of an aircraft according to any of Claim 3 to 5, wherein the first part (72) of the box substructure comprises a series of ribs (80) arranged perpendicular to the surface that is oriented toward the interior of the aircraft of the third and fourth faces.

7. Frame of a door provided at an opening made in a fuselage of an aircraft according to any of Claim 3 to 6, wherein each box substructure (62) comprises an angle bar (84) for providing the connection between the first wall (64) of the first part (72) and the skin of the fuselage.

8. Frame of a door provided at an opening made in a fuselage of an aircraft according to any of Claims 3 to 7, wherein the inclined wall (68) of the first part (72) of each substructure (62) comprises holes (88) for allowing access to the interior of the box substructure.

9. Frame of a door provided at an opening made in a fuselage of an aircraft according to any of Claims 3 to 8, wherein each substructure (62) comprises a second part (74) that is arranged in the plane of the skin of the fuselage, the first part comprising a face (78) that performs the splice function and that offers a single plane of installation for said second part (74) of the frame and for the rest of the skin of the fuselage.

10. Aircraft that comprises a frame of a door according to any of Claims 1 to 9.
